# EUROPÄISCHE PATENTANMELDUNG

(11) **EP 3 813 299 A1**
(43) Veröffentlichungstag der Anmeldung: **28.04.2021**
(21) Anmeldenummer: 19204649.8
(22) Anmeldetag: 22.10.2019
(51) Int. Cl.: H04L 12/12

(54) **VERFAHREN ZUR KONFIGURATION EINER ERSTEN KOMPONENTE, ERSTE KOMPONENTE, PUBLISH-SUBSCRIBE-SYSTEM UND COMPUTERPROGRAMMPRODUKT ZUR DURCHFÜHRUNG DES VERFAHRENS**

(71) Anmelder: Siemens Aktiengesellschaft, 80333 München (DE)
(72) Erfinder: Fischer, Thomas, 91058 Erlangen (DE); Höme, Stephan, 91126 Schwabach (DE); Jung, Konstantin, 90537 Feucht (DE); Kerschbaum, Sven, 90768 Fürth (DE); Volkmann, Frank, 90475 Nürnberg (DE)

(57) **Zusammenfassung**

Das Konfigurieren einer ersten Komponente in einem Publish-Subscribe-System, in dem Kommunikation zwischen Komponenten nach einem Publish-Subscribe-Standard erfolgt mit einer Einheit auf der ersten Komponente zur Interpretation einer von der ersten Komponente empfangenen Message mit konfigurierendem Inhalt, wobei die Message eine Message aus dem Publish-Subscribe-Standard ist. Somit wird der eigentlich zum Austausch von Daten zwischen den einzelnen Komponenten des Publish-Subscribe-Systems vorgesehene Standard zur Programmierung eines der Computer verwendet wird. Vorteilhaft wird hier eine Message verwendet, deren Format eigentlich als Antwort auf eine Anfrage ausgelegt ist und die die Ausführungsvorschrift der Konfiguration für die erste Komponente als Payload enthält.

## Beschreibung

Die vorliegende Erfindung betrifft ein Verfahren, mit dem im Rahmen einer Publish-Subscribe-Architektur eines Systems aus mehreren Softwarekomponenten oder eines verteilten Computersystems eine Client-Komponente als Publisher konfiguriert werden kann, ohne dass dieser Publisher große Mengen an Ressourcen vorhalten muss.

Kommunikation in verteilten Systemen aus mehreren Computern, Maschinensteuerungen oder anderen Mikroprozessorsystemen erfolgt nach verschiedenen Kommunikationsprotokollen. Hierfür werden Datenpakete über Netzwerkleitungen und/oder Bussysteme übertragen. In den Kommunikationsprotokollen sind die Formate festgelegt, denen die zwischen den einzelnen Systemkomponenten ausgetauschten Daten entsprechen.

Weit verbreitet sind Formate, in denen bei der Erstellung eines Datenpakets im sendenden Computersystem die Empfängeradresse in das Datenpaket eingefügt wird. Diese Empfängeradresse wird in den Header genannten Teil des Datenpakets geschrieben. Wenn ein Datenpaket an viele Empfänger gerichtet werden soll, wird die Message an eine Gruppe von Empfängern mit einer gemeinsamen Adresse versandt. Eine solche Datenübertragung wird als Multicast bezeichnet, da der Sender seine Daten einer Vielzahl von Empfängern mitteilt, die durch ihre Gruppenzugehörigkeit gekennzeichnet sind.

Wenn die Message nur einem einzelnen Empfänger gilt, spricht man von Unicast. Dabei kann ein einziger Empfänger durch Angabe seiner Empfängeradresse ausgewählt werden. Dies entspricht dem Vorgehen, dass zwischen Sender und Empfänger eine spezifische Verbindung, z.B. über ein direktes Kabel oder drahtlos über WLAN oder 5G oder eine andere drahtlose Verbindung, hergestellt wird.

Andererseits können alle im System verteilter Computer vorhandenen Einheiten als mögliche Empfänger dienen, indem die Daten der Nachricht auf das Netzwerk bzw. den Bus gestellt und von den für die Duplizierung/Filterung verantwortlichen Komponenten wie Bridges und Switches in einem als Flooding bezeichneten Schritt auf alle Kanäle verteilt werden. Diese Art der Übertragung wird als Broadcast bezeichnet.

Weiter gibt es eine asynchrone Art der Datenübertragung zwischen einzelnen Services, die besonders in Zusammenhang mit serverlosen Architekturen und mit Microservices verwendet wird. Hier wird jede Message zu einem bestimmten Topic allen diesem Topic zugeordneten Empfängern zugestellt. Der Sender wird dann als Herausgeber (englisch: Publisher) bezeichnet, die Empfänger als Abonnenten (englisch: Subscriber).

Hier ist eine Vereinbarung zwischen Publisher und Subscriber über die Datenübertragung erforderlich, damit das Datenpaket beim Empfänger, also dem Subscriber, erkannt werden kann. Damit ein Publisher seine Daten entsprechend ausgeben kann, muss er vorher konfiguriert worden sein. Diese Konfiguration beinhaltet z.B. Inhalt, Menge und Zeitpunkt der Datenübermittlung.

Der Teil 14 des OPC UA Standard regelt den Datenaustausch im Falle einer Architektur auf Basis des Publish-Subscribe-Konzepts. Die Vereinbarung zwischen Publisher und Subscriber über die Datenübertragung erfolgt hier dadurch, dass zunächst eine Anfrage an die Publisher im Rahmen einer Message versendet wird. Eine solche Message wird als Discovery Request Message bezeichnet. Diese Discovery Request Message wird vom Publisher mit einer Discovery Response Message beantwortet, in der der Publisher Daten zu der bzw. den von ihm veröffentlichten Messages an den oder die Subscriber bekannt gibt. Für die Konfiguration eines Publishers gibt es im Teil 14 des OPC UA Standard zwei Wege: mittels einer Konfigurationsdatei in Form eines bin-File, oder mittels Methodenaufrufen im OPC UA Server für den zu konfigurierenden Teilnehmer.

Das Format der Konfigurationsdatei ist im Standard spezifiziert. Es bleibt jedoch dem Anwender überlassen, wie die Übermittlung dieser Datei an den jeweiligen OPC UA PubSub-Teilnehmer (Publisher, Subscriber oder aber auch Publisher und Subscriber zugleich), also die Komponente im Publish-Subscribe-System, erfolgt. Hierfür bieten einzelne Hersteller proprietäre Lösungen an. Diese Lösungen sind jedoch nicht für Geräte anderer Hersteller anwendbar. Da heutige Netzwerke sehr heterogen sind, also Komponenten mehrerer verschiedener Hersteller enthalten, muss vor der Übermittlung einer Konfigurationsdatei diese Konfigurationsdatei gemäß des OPC UA Standards erstellt und nach Herstellerspezifikation an die jeweilige Komponente übertragen werden.

Im Rahmen der Architektur sollen die einzelnen Komponenten herstellerunabhängig konfigurierbar sein. Dies ist z.B. erforderlich, damit eine Konfiguration auch nach der Erstinstallation, also im Feld, jederzeit ohne den Aufwand der Verwendung eines für einen bestimmten Hersteller spezifischen Protokolls vorgenommen werden kann. Dieser Weg einer Konfiguration eines Publishers mittels der Konfigurationsdatei ist also problematisch, wenn die Konfiguration auch im Rahmen der Field Level Communication (FLC) vorgenommen wird.

Eine solche Konfiguration kann zum Beispiel nach dem Austausch einer Komponente durch eine Komponente mit gleicher Funktionalität erforderlich sein, wenn die neue Komponente von einem anderen Hersteller stammt als die ursprüngliche. Eine weitere Möglichkeit ist eine nachträgliche Erweiterung eines bestehenden Systems verteilter Computer um eine neu hinzugefügte Komponente.

Der Weg über Methodenaufrufe im OPC UA Server der jeweiligen Komponente im Publish-Subscribe-System, die als Publisher konfiguriert werden soll, bringt eine Reihe von Erfordernissen mit sich. Besonders wichtig ist dabei, dass die zu konfigurierende Komponente die Client-Funktionalität in der Kommunikation mit dem OPC UA Server komplett beherrschen muss. Dazu gehört auch, dass die Client/Server-Funktionalität und damit TCP/IP unterstützt werden müssen. Dadurch entsteht ein hoher Bedarf an Ressourcen in der jeweiligen Komponente, insbesondere an Flashspeicher und RAM.

Häufig sollen Komponenten verteilter Netzwerke jedoch nur Ressourcen in unbedingt erforderlichem Ausmaß erhalten, insbesondere an Speicher. Dies dient der dedizierten Auslegung für die jeweilige spezielle Aufgabe. Mit anderen Worten: ein möglichst großer Teil der Ressourcen der jeweiligen Komponente soll für die eigentliche Aufgabe dieser Komponente zur Verfügung stehen und nicht zu anderen Zwecken wie der Kommunikation. Weiter dient dies der Reduzierung des materiellen Aufwands bei der Herstellung der Komponente und somit der Kostensenkung. Ein größerer Softwarestapel (hier konkret: Unterstützung TCP und OPC UA Client/Server) bietet zudem eine größere Security-Angriffsfläche und erfordert oftmals einen höheren Maintenance-Aufwand.

Vor diesem Hintergrund besteht eine Aufgabe der vorliegenden Erfindung darin, die Konfiguration eines Publishers zu verbessern und zu vereinfachen.

Demgemäß wird ein Verfahren vorgeschlagen, das zum Konfigurieren einer ersten Komponente in einem weitere Komponenten enthaltenden Publish-Subscribe-System dient mit dem Bereitstellen einer Einheit auf der ersten Komponente zur Interpretation einer von der ersten Komponente empfangenen Message mit konfigurierendem Inhalt, wobei die Message eine Message aus dem Publish-Subscribe-Standard ist.

Dieses Verfahren zeichnet sich dadurch aus, dass der eigentlich zum Austausch von Daten zwischen den einzelnen Komponenten des Publish-Subscribe-Systems vorgesehene Standard zur Programmierung der ersten Komponente, also eines der Computer, verwendet wird. Somit wird z.B. ein Prozessor eines Temperatursensors, der den anderen Komponenten des Systems verteilter Computer in seiner Funktion als Publisher die aktuelle Temperatur und ggf. die Überschreitung oder Unterschreitung bestimmter Grenzwerte mitteilen kann, im Rahmen des Kommunikationsprotokolls des Publish-Subscribe-Standards konfiguriert. Somit ist es nicht erforderlich, dass der Prozessor des Temperatursensors Details des Systems verteilter Computer, wie z.B. das komplette Kommunikationsprotokoll und den gesamten Adressraum, in seinem Speicher verfügbar hat.

Gemäß einer Ausführungsform enthält das Verfahren weiter die Schritte
- Übermitteln der Message mit konfigurierendem Inhalt durch eine Komponente mit Managementfunktion an die erste Komponente, wobei die Message mit konfigurierendem Inhalt eine Discovery Response Message ist, und
- Interpretieren der Message mit konfigurierendem Inhalt zur Konfiguration der ersten Komponente als Publisher auf der ersten Komponente durch die Einheit.

Die Besonderheit dieser Ausführungsform besteht darin, dass hier eine Message, die eigentlich als Antwort auf eine Anfrage ausgelegt ist, für die erste Komponente die Ausführungsvorschrift der Konfiguration als Payload enthält. Diese Programmierung geht nach der im Standard vorgesehenen Vorgehensweise dem Empfang einer Anfrage voraus und erfolgt deswegen auch zeitlich vor dem Versand einer Antwort. Mit anderen Worten zeichnet sich diese Ausführungsform dadurch aus, dass einerseits eine Antwort vor der Anfrage versandt wird und dass andererseits diese Antwort eine Programmierung zur Konfiguration enthält.

Gemäß einer weiteren Ausführungsform beinhaltet der oben beschriebene Schritt des Ausführens der Programmierung auf der ersten Komponente folgende Schritte:
- Interpretieren der von dieser Komponente empfangenen Discovery Response Message mit konfigurierendem Inhalt,
- Erstellen einer Published Network Message,
- Erstellen von Metainformationen zur Published Network Message,
- Programmieren zum Empfang einer Discovery Request Message,
- Erstellen einer Discovery Response Message als Antwort auf eine Discovery Request Message mit den Metainformationen zur Published Network Message,
- Programmieren der ersten Komponente zum Versenden der Discovery Response Message mit der Struktur der Published Network Message und zum Versenden der Published Network Message.

Dies bedeutet, dass durch das Ausführen der Programmierung die Konfiguration der ersten Komponente so vorgenommen wird, dass sie als Publisher fungieren kann. Einerseits wird mit diesen Verfahrensschritten festgelegt, wie die Published Network Message der ersten Komponente aufgebaut ist. Es ist Aufgabe der ersten Komponente als Publisher, diese Message ihren Subscribern zur Verfügung zu stellen. Weiter wird hier die erste Komponente in die Lage versetzt, auf eine Discovery Request Message mit der entsprechenden Discovery Response Message zu antworten und schließlich die Published Network Message zu versenden.

Gemäß einer weiteren Ausführungsform enthält das Verfahren den weiteren Schritt des Einrichtens einer Security Group auf einem Schlüsselverteilserver für Security Key Services für die Übermittlung der Discovery Response Message mit konfigurierendem Inhalt durch die Komponente mit Managementfunktion.

Die Kommunikation der Komponente mit Managementfunktion und der ersten Komponente kann verschlüsselt erfolgen, wenn die Komponente mit Managementfunktion hierfür im Schlüsselverteilserver für den Security Key Service eine Security Group zur Konfiguration der ersten Komponente, also des Publishers, einrichtet. Sobald diese Security Group existiert, kann die Kommunikation zwischen dem Publisher und der Komponente mit Managementfunktion verschlüsselt und damit mit erhöhter Sicherheit erfolgen. Der SKS kann entscheiden, wer berechtigt ist, das Schlüsselmaterial abzurufen. Dies ist insbesondere bei Multicast/Broadcast von Bedeutung, da sich hier prinzipiell jeder an einer Gruppe anmelden und somit die Nachrichten empfangen kann (der Sender hat hierauf keinen Einfluss/Kontrolle). Somit können im Prinzip auch die vom Publisher bereitgestellten Messages verschlüsselt werden.

Gemäß einer weiteren Ausführungsform ist die Verbindung zwischen der Komponente mit Managementfunktion und der ersten Komponente Bestandteil eines die einzelnen Komponenten des Publish-Subscribe-Systems verbindenden Netzwerks. Es kann sich bei diesem Netzwerk um eine Form von Ethernet oder einen Bus, wie z.B. Feldbus, handeln.

In einer hierzu alternativen Ausführungsform besteht eine separate Verbindung zwischen der Komponente mit Managementfunktion und der ersten Komponente, z.B. über eine USB-Leitung oder drahtlos über WLAN oder 5G.

Gemäß einer weiteren Ausführungsform ist die Komponente mit Managementfunktion ein Server.

Gemäß einer weiteren Ausführungsform ist die Komponente mit Managementfunktion eine weitere Komponente des Publish-Subscribe-Systems, insbesondere ein anderer Subscriber.

Gemäß einer weiteren Ausführungsform ist die Komponente mit Managementfunktion eine speicherprogrammierbare Steuerung.

Weiterhin wird ein Computerprogrammprodukt vorgeschlagen, welches auf einer programmgesteuerten Einrichtung die Durchführung des vorstehend erläuterten Verfahrens veranlasst. Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Vorgeschlagen wird auch eine erste Komponente mit einer Einheit, wobei die Einheit eine von der Vorrichtung empfangene Message mit konfigurierendem Inhalt interpretiert, wobei die Message mit konfigurierendem Inhalt eine Message aus dem Publish-Subscribe-Standard ist.

Weiter wird ein Publish-Subscribe-System vorgeschlagen mit einer ersten und mit weiteren Komponenten.

Dieses Publish-Subscribe-System kann so gestaltet sein, dass eine darin enthaltene Komponente mit Managementfunktion ein Server ist und die erste und die weiteren Komponenten Clients sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische Darstellung eines Publish-Subscribe-Systems;
Fig. 2 zeigt ein Flussdiagramm mit einem Ablauf des Verfahrens zur Konfiguration;
Fig. 3 zeigt ein Flussdiagramm mit Details eines Schrittes des Verfahrens der Fig. 2;
Fig. 4 zeigt eine Erweiterung des Verfahrens der Fig. 2;
Fig. 5 zeigt ein Flussdiagramm mit Details eines Schrittes des Verfahrens der Fig. 4;
Fig. 6 zeigt eine schematische Darstellung eines verteilten Systems aus mehreren Computern in einer anderen Konfiguration als Fig. 1; und
Fig. 7 ist eine schematische Darstellung des Aufbaus einer Message.

In den Figuren sind gleiche oder funktionsgleiche Elemente mit denselben Bezugszeichen versehen worden, sofern nichts anderes angegeben ist.

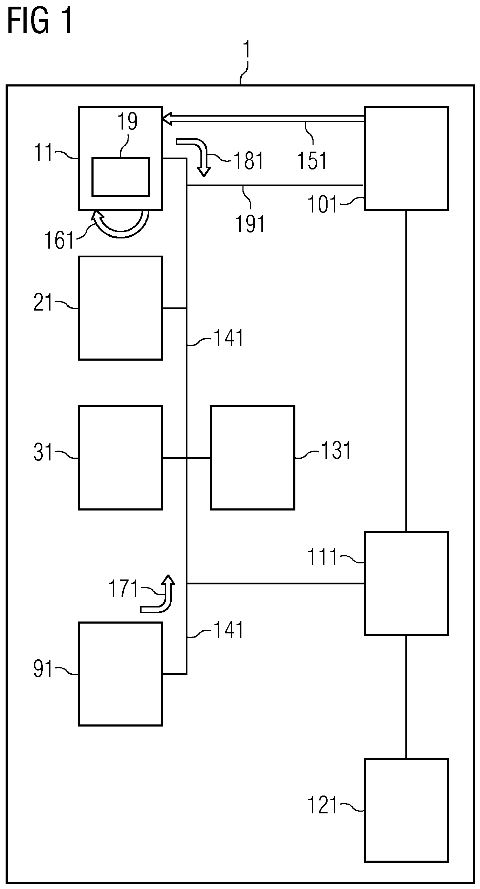

In Fig. 1 ist in einer Übersicht der Aufbau eines Publish-Subscribe-Systems 1 verteilter Computer oder SoftwareKomponenten dargestellt. Die verteilten Computer werden auch als Komponenten oder Systemkomponenten bezeichnet. Eine erste Komponente 11, die z.B. der Mikroprozessor eines Sensors für Temperatur oder Druck sein kann, ist über ein Netzwerk oder einen Bus 141 mit weiteren Komponenten 21, 31, ..., 91 verbunden. Die Komponenten 11 - 91 können PCs, Computer oder Mikrocontroller sein, die z.B. Messwerte der oben erwähnten Sensoren für Temperatur, Druck, Füllstand, Position, Drehzahl etc. digital aufbereiten oder andererseits Aktoren wie Antriebe, Umrichter etc. ansteuern.

Das Netzwerk 141 kann ein Feldbus sein oder ein Netzwerk nach dem Ethernet Standard. Auch drahtlose Netzwerke sind möglich. In diesem Netzwerk 141 befindet sich auch eine Komponente 101 mit Managementfunktion. Wenn diese Komponente 101 ein Server im Publish-Subscribe-System 1 ist, fungieren die Komponenten 11 bis 91 als Clients dieses Servers. Es kann sich dabei um den OPC UA Server handeln. Weiter kann ein Schlüsselverteilserver 131 für Security Key Services (SKS) im Netzwerk 141 vorhanden sein. Eine speicherprogrammierbare Steuerung (SPS) 121 ist über einen Switch 111 mit dem Netzwerk 141 verbunden. Der Switch 111 kann für die Verbindung zum Netzwerk 141 eine Umschaltung zwischen der Komponente 101 mit Managementfunktion und der SPS 121 bewerkstelligen.

Für die Komponenten 11 - 101 ist dabei zu unterscheiden, ob sie aktive Clients sind, die als Publisher fungieren. Beispiele sind Mikrocontroller von Sensoren. Passive Clients, also Subscriber nehmen dagegen z.B. nur Mess- oder Sollwerte entgegen. Ein Beispiel ist ein Stellglied, das einen Sollwert entgegennimmt, ohne einen Istwert oder eine Statusmeldung auszugeben. Clients können sowohl aktiv als auch passiv sein, wie z.B. ein Antriebsregler, der passiv als Subscriber seinen Sollwert empfängt und aktiv den Istwert als Publisher für die anderen Clients zur Verfügung stellt.

In der Komponente 11 wird eine Einheit 19 vorgesehen, die in der Lage ist, eine Message von der Komponente 101 mit Managementfunktion zu empfangen. Diese Einheit 19 kann z.B. in der Firmware der Komponente 11 implementiert sein oder ein reines Softwareprogramm sein, das auf die Komponente 11 aufgespielt wird.

Die Schritte des Verfahrens werden in Fig. 1 durch Pfeile symbolisiert. Der Pfeil 151 symbolisiert die Übertragung der Discovery Response Message zur Konfiguration von der Komponente 101 mit Managementfunktion an die erste Komponente 11. In der Komponente 11 führt die Einheit 19 dann die Konfiguration der ersten Komponente 11 als Publisher durch, was durch den Pfeil 161 dargestellt wird. Eine weitere Komponente, hier die Komponente mit dem Bezugszeichen 91, sendet eine Discovery Request Message 171 an die erste Komponente 11, wie der Pfeil 171 zeigt. Darauf antwortet die erste Komponente 11 mit einer Discovery Response Message, was durch den Pfeil 181 dargestellt wird.

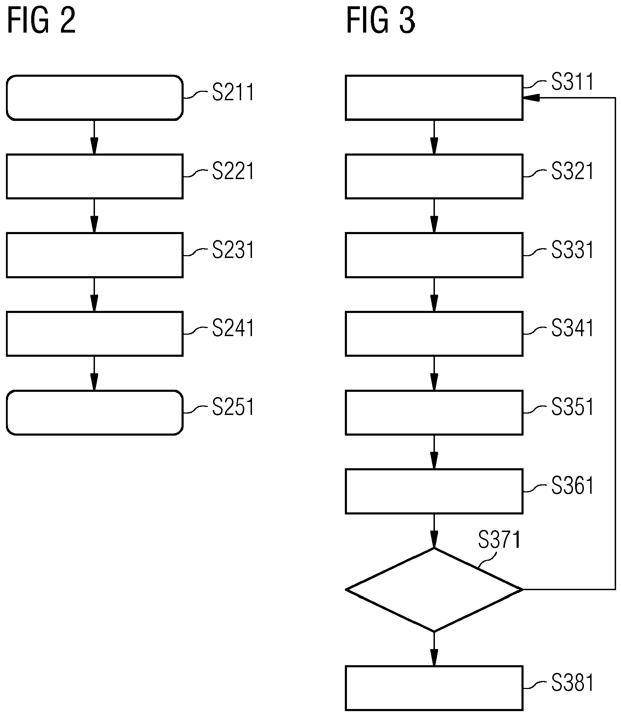

In Fig. 2 ist in einem Flussdiagramm eine Übersicht über verschiedene Schritte dargestellt, mit denen die Komponente 11 für eine Kommunikation nach dem Publish-Subscribe-Konzept konfiguriert wird. Das Verfahren beginnt im Schritt S211. Im Schritt S221 wird die erste Komponente 11 bereitgestellt mit einer Programmierung in der Einheit 19, die es ihr ermöglicht, Messages zu interpretieren. Im Schritt S231 sendet die Komponente 101 mit Managementfunktion eine Message mit konfigurierendem Inhalt an die erste Komponente 11. Dieser Schritt S231 ist in Fig. 1 mit dem Pfeil 151 dargestellt. Im Schritt S241 führt die Einheit 19 in der ersten Komponente 11 dann das in dieser Message enthaltene Konfigurationsprogramm aus. Im Schritt S251 endet das Verfahren.

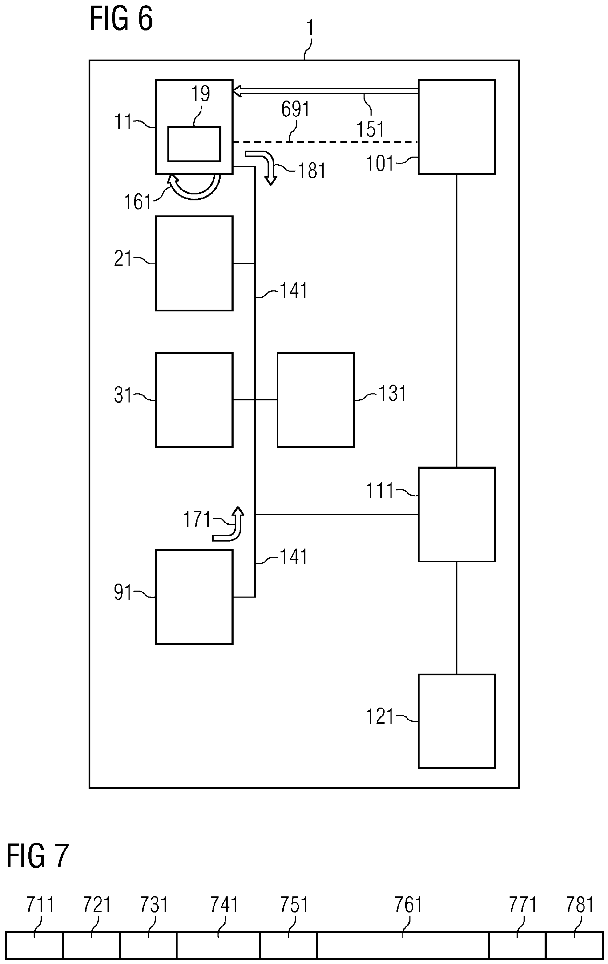

In Fig. 3 ist dargestellt, wie der Schritt S241 im Detail abläuft. Zunächst wird im Schritt S311 die Discovery Response Message zerlegt und interpretiert. Details des Aufbaus der Message werden weiter unten im Zusammenhang mit Fig. 7 erläutert. Diese Interpretation erfolgt in der Einheit 19 der ersten Komponente 11 in Fig. 1. Danach wird im Schritt S321 die Published Network Message selbst erstellt gemäß den Vorgaben, die in der Discovery Response Message enthalten sind. Dies umfasst das Anlegen von mindestens einer PublishedDataSet bestehend aus mindestens einem DataSetItem, das Anlegen von DataSetWritern und WriterGroups sowie der PubSub-Connection.

Weiter werden im Schritt S331 Metainformationen zu dieser Published Network Message aufgebaut, damit sie in eine Discovery Response Message eingebaut werden können, die dann von der ersten Komponente 11 versandt wird. Entsprechend wird im Schritt S341 festgelegt, wie diese erste Komponente 11 beim Empfang einer Discovery Request Message vorgeht. Im Schritt S351 wird dann die Discovery Response Message erstellt, die von der ersten Komponente 11 als Antwort auf eine Discovery Request Message versandt werden kann. Dann erfolgt im Schritt S361 die Programmierung zum Versenden der Discovery Response Message und zum Versenden der Published Network Message für die erste Komponente 11. Danach wird im Schritt S371 noch abgefragt, ob gegebenenfalls eine weitere Published Network Message von der Komponente 11 erstellt werden muss. Wenn dies der Fall ist, kehrt das Verfahren zum Schritt S311 zurück. Ansonsten endet das Verfahren im Schritt S381 mit dem Starten des Publishers.

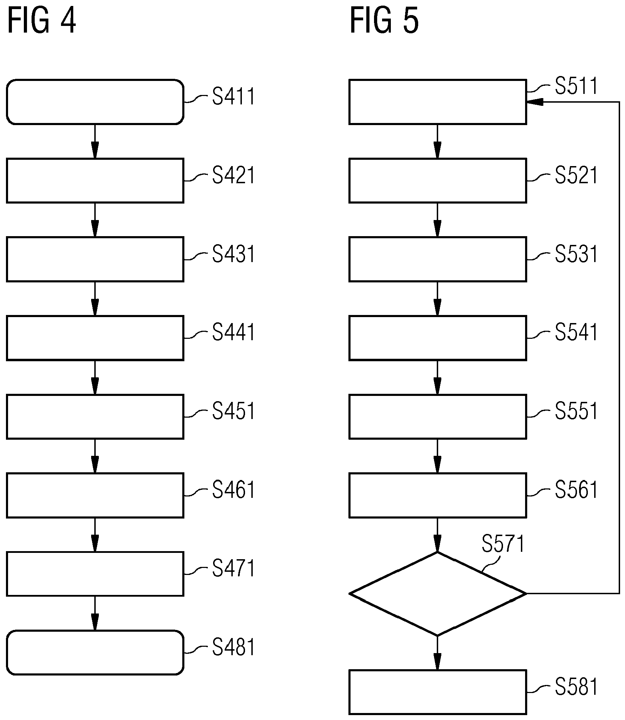

Fig. 4 zeigt einen Workflow, in dem die Kommunikation zwischen der Komponente 101 mit Managementfunktion und der ersten Komponente 11 verschlüsselt durchgeführt wird. Nach dem Start im Schritt S411 und dem Bereitstellen der ersten vorprogrammierter Komponente 11 im Schritt S421 richtet die Komponente 101 mit Managementfunktion im Schritt S431 auf dem Schlüsselverteilserver 131 eine Security Group ein und teilt der ersten Komponente 11 die Daten über diese Security Group mit. Danach sendet die Komponente 101 mit Managementfunktion im Schritt S441 eine Discovery Response Message, die als Payload die Konfiguration als Publisher enthält, an die erste Komponente 11. Im Schritt S451 holt die erste Komponente 11 den Schlüssel vom Schlüsselverteilserver 131. Im Schritt S461 verwendet die erste Komponente 11 diesen Schlüssel für die empfangene Discovery Response Message. Danach führt die Einheit 19 in der ersten Komponente 11 im Schritt S471 das als Payload in der Discovery Response Message enthaltene Konfigurationsprogramm aus und wird dadurch zum Publisher. Im Schritt S481 endet dann die verschlüsselte Kommunikation zwischen Komponente 101 mit Managementfunktion und der ersten Komponente 11.

Fig. 5 entspricht im Wesentlichen der Fig. 3, wobei allerdings die Programmierung vorsieht, dass die Published Network Message auch verschlüsselt versandt wird. Der Schritt S511 entspricht dem Schritt S311 aus Fig. 3.Im Schritt S521 der Erstellung der Published Message wird dieser ergänzend zum Schritt S321 noch die Verschlüsselung hinzugefügt. Entsprechend enthalten die im Schritt S531 erstellten Metainformationen zur Published Network Message Verschlüsselungsfunktionen. Der Schritt S541 der Programmierung zum Empfang einer Discovery Request Message entspricht wieder dem Schritt S341. Die im Schritt S551 programmierte Discovery Response Message enthält wiederum Angaben zur Verschlüsselung. Im Schritt S561 erfolgt dann die Programmierung zum Versenden der Discovery Response Message und zum Versenden der Published Network Message, wobei letztere wieder verschlüsselt wird. Der Abfrageschritt S571 entspricht wieder dem Schritt S371. Schließlich wird im Schritt S581 der Publisher gestartet.

Fig. 6 entspricht im Wesentlichen der Fig.1. In Fig. 1 ist die erste Komponente 11 mit der Komponente mit Managementfunktion 101 über die Verbindung 191 oder über den Switch 111 mit dem Netzwerk/Bus 141 verbunden. Dagegen sind in Fig. 6 die erste Komponente 11 und die Komponente mit Managementfunktion 101 über die Verbindung 691 verbunden, die vom Netzwerk/Bus 141 getrennt ist. Diese Verbindung 691 kann drahtgebunden realisiert werden, wie über USB, oder drahtlos über WLAN oder 5G.

Fig. 7 zeigt schließlich den Aufbau einer Message im Publish-Subscribe-System 1. Sie enthält die folgenden Bestandteile:
- 711: Network Message Header
- 721: Group Header
- 731: Payload Header
- 741: Extended Message Header
- 751: Security Header
- 761: Payload
- 771: Security Footer
- 781: Signature

Dabei sind im Network Message Header 711 im Bereich der Extended Flags Bits vorgesehen, die Messages als Discovery Response oder Discovery Request kennzeichnen.

Obwohl die vorliegende Erfindung anhand von Ausführungsbeispielen beschrieben wurde, ist sie vielfältig modifizierbar.

### Bezugszeichenliste

1 Publish-Subscribe-System
11 erste Komponente
21 zweite Komponente
31 dritte Komponente
91 n-te Komponente
101 Komponente mit Managementfunktion
111 Switch
121 SPS/PLC
131 Schlüsselverteilserver für SKS
141 Netzwerk/Bus
151 Discovery Response Message zur Konfiguration
161 Ausführung der Konfiguration
171 Discovery Request Message
181 Discovery Response Message
191 Verbindung zwischen Komponente mit Managementfunktion und erster Komponente
S211 Start
S221 Bereitstellen vorprogrammierter Komponente
S231 Senden Discovery Response Message mit Konfiguration als Payload an erste Komponente
S241 erste Komponente führt Konfigurationsprogramm aus
S251 Ende
S311 Interpretation der Discovery Response Message
S321 Erstellung der Published Network Message
S331 Erstellung der Metainformationen zur Published Network Message
S341 Programmierung zum Empfang einer Discovery Request Message
S351 Programmierung einer Discovery Response Message als Antwort auf eine Discovery Request Message
S361 Programmierung zum Versenden der Discovery Response Message und zum Versenden der Published Network Message
S371 Abfrage: Programmierung f. weitere Published Network Message erforderlich?
S381 Starten des Publishers
S411 Start
S421 Bereitstellen vorprogrammierter Komponente
S431 Konfigurierende Instanz richtet Security Group im SKS ein
S441 Konfigurierende Instanz sendet Discovery Response mit Konfiguration als Payload verschlüsselt
S451 erste Komponente holt Schlüssel für Security Group von SKS
S461 erste Komponente entschlüsselt Discovery Response Message
S471 erste Komponente führt Konfigurationsprogramm aus
S481 Ende
S511 Interpretation der konfigurierenden Discovery Response Message
S521 Erstellung der Published Network Message
S531 Erstellung der Metainformationen zur Published Network Message incl. Security Key
S541 Programmierung zum Empfang einer Discovery Request Message
S551 Programmierung einer Discovery Response Message incl. Security Key als Antwort auf Discovery Request Message
S561 Programmierung zum Versenden der Discovery Response Message und zum Versenden der Published Network Message incl. Security Key
S571 Abfrage: Programmierung für weitere Published Network Message erforderlich?
S581 Starten des Publishers
691 Verbindung zwischen Komponente mit Managementfunktion und erster Komponente
711 Network Message Header
721 Group Header
731 Payload Header
741 Extended Message Header
751 Security Header
761 Payload
771 Security Footer
781 Signature

## Patentansprüche

1. Verfahren zum Konfigurieren einer ersten Komponente (11) in einem weitere Komponenten (21, 31, ..., 91) enthaltenden Publish-Subscribe-System (1), mit:
- Bereitstellen (S221) einer Einheit (19) auf der ersten Komponente (11) zur Interpretation einer von der ersten Komponente (11) empfangenen Message mit konfigurierendem Inhalt, wobei die Message eine Message aus dem Publish-Subscribe-Standard ist.

2. Verfahren nach Anspruch 1,
**gekennzeichnet durch**
- Übermitteln (151, S231) der Message mit konfigurierendem Inhalt durch eine Komponente (101) mit Managementfunktion an die erste Komponente (11), und
- Interpretieren (161, S241) der Message mit konfigurierendem Inhalt zur Konfiguration der ersten Komponente (11) als Publisher auf der ersten Komponente (11) durch die Einheit (19), wobei die Message mit konfigurierendem Inhalt eine Discovery Response Message ist.

3. Verfahren nach Anspruch 2,
**dadurch gekennzeichnet,**
**dass** der Schritt des Interpretierens (161, S241) der Message mit konfigurierendem Inhalt durch die Einheit (19) folgende Schritte beinhaltet:
- Interpretieren (S311) der von der Komponente (11) empfangenen Discovery Response Message mit konfigurierendem Inhalt,
- Erstellen (S321) einer Published Network Message,
- Erstellen (S331) von Metainformationen zur Published Network Message,
- Programmieren (S341) zum Empfang einer Discovery Request Message,
- Erstellen (S351) einer Discovery Response Message als Antwort auf eine Discovery Request Message mit den Metainformationen zur Published Network Message,
- Programmieren (S361) der ersten Komponente (11) zum Versenden der Discovery Response Message mit der Struktur der Published Network Message und zum Versenden der Published Network Message.

4. Verfahren nach einem der Ansprüche 1 - 3,
**gekennzeichnet durch**
den weiteren Schritt des Einrichtens (S431) einer Security Group auf einem Schlüsselverteilserver (131) für Security Key Services für die Übermittlung (151, S231) der Discovery Response Message mit konfigurierendem Inhalt durch die Komponente (101) mit Managementfunktion.

5. Verfahren nach einem der Ansprüche 1 - 4,
**dadurch gekennzeichnet,**
**dass** die Verbindung (191) zwischen der Komponente (101) mit Managementfunktion und der ersten Komponente (11) Bestandteil eines die Komponenten (11, 21, 31, ..., 91) verbindenden Netzwerks (141) ist.

6. Verfahren nach einem der Ansprüche 1 - 4,
**dadurch gekennzeichnet,**
**dass** die Verbindung (691) zwischen der Komponente (101) mit Managementfunktion und der ersten Komponente (11) eine von einem die Komponenten (11, 21, 31, ..., 91) verbindenden Netzwerk (141) separate Verbindung ist.

7. Verfahren nach einem der Ansprüche 1 - 6,
**dadurch gekennzeichnet,**
**dass** die Komponente (101) mit Managementfunktion ein Server ist.

8. Verfahren nach einem der Ansprüche 1 - 6,
**dadurch gekennzeichnet,**
**dass** die Komponente (101) mit Managementfunktion eine weitere Komponente (21, 31, ..., 91) ist.

9. Verfahren nach einem der Ansprüche 1 - 6,
**dadurch gekennzeichnet,**
**dass** die Komponente (101) mit Managementfunktion eine speicherprogrammierbare Steuerung (121) ist.

10. Computerprogrammprodukt, das auf einer programmgesteuerten Einrichtung die Durchführung eines Verfahrens nach einem der Ansprüche 1 - 9 veranlasst.

11. Erste Komponente (11) in einem weitere Komponenten (21, 31, ..., 91) enthaltenden Publish-Subscribe-System (1), wobei erste Komponente (11) eine Einheit (19) aufweist, die zur Interpretation einer von der Vorrichtung (11) empfangenen Message mit konfigurierendem Inhalt eingerichtet ist, wobei die Message mit konfigurierendem Inhalt eine Message aus dem Publish-Subscribe-Standard ist.

12. Publish-Subscribe-System (1) mit Komponenten umfassend eine erste Komponente (11) nach den Anspruch 11 und weitere Komponenten (21, 31, ..., 91) .

13. Publish-Subscribe-System (1) nach Anspruch 12 und mit einer Komponente mit Managementfunktion (101), **dadurch gekennzeichnet, dass** die Komponente mit Managementfunktion (101) ein Server ist und die Vorrichtung nach Anspruch 11 und die weiteren Komponenten (21, 31, ..., 91) Clients sind.
